# EUROPÄISCHE PATENTSCHRIFT

(11) **EP 1 972 746 B1**
(45) Veröffentlichungstag und Bekanntmachung des Hinweises auf die Patenterteilung: **14.03.2012**
(21) Anmeldenummer: 07111823.6
(22) Anmeldetag: 05.07.2007
(51) Int. Cl.: E05F 15/00, E05F 15/16, H04B 1/16

(54) **Überwachungsverfahren für ein motorisch angetriebenes Tor**
Surveillance method for a motor driven door
Procédé de surveillance pour une porte actionnée mécaniquement

(30) Priorität: 23.03.2007 DE 102007014627; 23.03.2007 DE 102007014626
(43) Veröffentlichungstag der Anmeldung: 24.09.2008
(73) Patentinhaber: Feig Electronic GmbH, 35781 Weilburg-Waldhausen (DE)
(72) Erfinder: Schäfer, Dirk, 35789, Weilmünster (DE); Heinze, Frieder, 35625, Hüttenberg (DE)
(74) Vertreter: Knefel, Cordula

(56) Entgegenhaltungen:
- DE-A1- 10 302 812
- US-A- 5 412 297
- US-A1- 2004 077 383
- US-A1- 2005 017 663

## Beschreibung

Die Erfindung betrifft ein Überwachungsverfahren für ein motorisch angetriebenes Tor. Unter dem Begriff Tor wird in diesem Zusammenhang jede Vorrichtung verstanden, mit der ein Gebäude oder ein Gelände verschlossen werden kann, darunter fallen beispielsweise Schiebetore, Rolltore, Sektionaltore oder Schwingtore.

Insbesondere betrifft die Erfindung ein von einer an dem Torblatt oder Torbehang montierten batteriebetriebenen Überwachungsvorrichtung durchgeführtes Verfahren, die zum drahtlosen Datenaustausch über eine bidirektionale Funkverbindung mit einer stationären Einheit vorgesehen ist und ein Verfahren zum fehlersicheren und Strom sparenden Betrieb der Überwachungsvorrichtung.

Zum Stand der Technik (DE 103 02 812 B4) gehört eine Überwachungsvorrichtung und ein Überwachungsverfahren für einen motorisch angetriebenen Gebäudeabschluss, insbesondere ein Tor. Dieses zum Stand der Technik gehörende Tor weist ein Motorantriebsaggregat auf zum Antrieb eines bewegbaren Flügels des Tores und eine Kontrollvorrichtung zur Steuerung und Überwachung der Bewegung des Flügels. Die Kontrollvorrichtung besteht aus einer ersten ortsfesten elektrotechnischen Einheit und einer zweiten an dem Flügel zur Mitbewegung angeordneten beweglichen elektrotechnischen Einheit, die mit der ortsfesten Einheit kommunizieren kann. An dem Flügel ist neben der mitfahrenden Einheit ein mitfahrender Sende-Empfänger vorgesehen und neben der ortsfesten Einheit ist ein ortsfester Sende-Empfänger vorgesehen, wobei beide Sende-Empfänger die beiden Einheiten drahtlos miteinander verbinden. Bei diesem zum Stand der Technik gehörenden Tor ist der Sende-Empfänger zum gepulsten Betrieb fähig und der mitfahrende Sende-Empfänger und die mitfahrende Einheit können aus einem Strom sparenden Wartezustand in einen Betriebszustand umgeschaltet werden. Der mitfahrende Sende-Empfänger ist selbsttätig steuerbar, derart, dass er wiederholt aus einem Wartezustand in den Betriebszustand und wieder in den Wartezustand umschaltet, wenn er während des Betriebszustandes kein aktivierendes, uncodiertes Signal in Form einer ausreichenden Höhe einer Feldstärke von einer beliebigen ortsfesten Einheit detektiert hat.

Diese zum Stand der Technik gehörende Vorrichtung weist den Nachteil auf, dass mit dieser Torsteuerung nicht mehrere Tore nebeneinander betrieben werden können. Der Sende-Empfänger eines ersten Tores schaltet sich selbsttätig in einen Betriebszustand. Wenn er ein Signal mit einer ausreichenden hohen Feldstärke erhält, bleibt er aktiv. Auf diese Art und Weise kann es vorkommen, dass die Sende-Empfänger mehrerer nebeneinander angeordneter Tore parallel aktiv bleiben und damit unnötig Strom verbrauchen.

Weiterhin gehört zum Stand der Technik (US 5,412,297 A) eine Schließkanteneinheit, die das ordnungsgemäße und hindernisfreie Schließen eines Tores überwacht. Gemäß diesem Stand der Technik ist ein Vibrationssensor vorgesehen, der die Bewegung des Tores erfasst und eine Kontrollelektronik inklusive eines Mikroprozessors und eines Signaltransmitters so lange aktiviert, wie er die Bewegung des Tores detektiert. Der Transmitter übermittelt nach dem Aufwecken ein kontinuierliches erstes "Heartbeat"-Signal. Sobald die Schließkanteneinheit ein Hindernis detektiert hat sendet sie ein anderes Heartbeat-Signal, welches sich von dem ersten Heartbeat-Signal unterscheidet. Empfängt die Torsteuerung dieses zweite Heartbeat-Signal oder keines der beiden Heartbeat-Signale, wird die Torbewegung gestoppt oder es erfolgt eine Reversion der Torbewegung bis das Tor vollständig geöffnet ist. Das "Heartbeat"-Signal wird beispielsweise bei einem Defekt der Schließkanteneinheit unterbrochen

Dieses zum Stand der Technik gehörende Verfahren weist den Nachteil auf, dass seine einwandfreie Funktion voraussetzt, dass der Vibrationssensor während der gesamten Torbewegung so starken Vibrationen ausgesetzt werden muss, dass er die Torbewegung zuverlässig erkennen kann, was bei einer linearen Torbewegung eines ruhig laufenden Tores die Gefahr birgt, dass der Vibrationssensor diesen Zustand als Torstillstand fehlinterpretieren kann, was ein Abschalten des ersten Heartbeat-Signals und damit eine Fehlfunktion zur Folge hätte. Zur Vermeidung dieses Problems könnte zwar ein Vibrationssensor mit sehr hoher Empfindlichkeit eingesetzt werden. Ein derart empfindlicher Vibrationssensor hätte jedoch den Nachteil, dass die Schließkanteneinheit in jedem Fall der Erfassung einer Vibration geweckt und vollständig aktiviert wird, wodurch der übliche Stromverbrauch verursacht wird. Erfasst der Vibrationssensor ein Signal, beispielsweise weil starker Wind an dem Tor "rüttelt", wird die gesamte Elektronik geweckt, so dass der Stromverbrauch bei dieser zum Stand der Technik gehörenden Einrichtung relativ hoch ist. Ferner hat diese Vorrichtung den Nachteil, dass sie nicht zuverlässig unterscheiden kann, ob sich das Tor in einer Zubewegung oder in einer Aufbewegung befindet, was dazu führt, dass die gesamte Elektronik unter Umständen auch während der Aufbewegung, bei der bei vielen Toren keine Überwachung notwendig ist, wach ist und ihr "Heartbeat"-Signal sendet und damit Strom verbraucht.

Die erwähnten Nachteile treffen auch auf die zum Stand der Technik gehörende Schließkanteneinheit US 7,123,144 B2 zu, da auch die dort beschriebene Schließkanteneinheit nur in Abhängigkeit der Detektion einer Torbewegung durch einen Bewegungsdetektor funktioniert.

Weiterhin gehört zum Stand der Technik (US 2006/0028157 A1) eine Vorrichtung, die ein "Check Signal" aussendet, sobald ein pneumatischer Sensor ausgelöst wird, wenn das Tor auf ein Hindernis trifft. Aufgrund dieses "Check Signals", welches durch eine Torsteuerung empfangen wird, wird ein Stoppen und Reversieren des Tores eingeleitet.

Diese zum Stand der Technik gehörende Vorrichtung hat den Nachteil, dass sie ausgesprochen unsicher ist, da die Torsteuerung nicht zuverlässig feststellen kann, ob sie überhaupt in der Lage ist, das "Check Signal" zu empfangen.

Das der Erfindung zugrunde liegende technische Problem besteht darin, ein Überwachungsverfahren zum drahtlosen Datenaustausch zwischen einer Überwachungsvorrichtung und einer stationären-Einheit anzugeben, das einen weitgehend fehlersicheren Betrieb mit schnellen Reaktionszeiten gewährleistet, und mit dem mehrere Tore innerhalb eines vorgegebenen Bereiches störungsfrei und Strom sparend nebeneinander betrieben werden können. Darüber hinaus soll eine stationäre Einheit angegeben werden, die preiswert und/oder einfach nachrüstbar ist.

Zum Stand der Technik (US 2004/0077383 A1) gehört darüber hinaus ein Funkverfahren zwischen zwei batteriebetriebenen Funkvorrichtungen, bei dem eine Funkvorrichtung bei Erfassen eines Weckereignisses geweckt wird und in einen Betriebszustand versetzt wird, so dass die Funkvorrichtung ein Signal aussendet. Erhält die Funkvorrichtung keine Antwort, geht die Funkvorrichtung in einen passiven Modus für einen vorbestimmten zeitraum über. Dieses zum Stand der Technik gehörende Verfahren weist den Nachteil auf, dass es für ein Überwachungsverfahren für ein motorisch angetriebenes Tor nicht einsetzbar ist, da eine Überwachungsvorrichtung nicht einfach in einen Schlafmodus übergehen darf, wenn keine Sendesignale erhalten werden, da hierdurch eine zuverlässige Arbeitsweise eines Tores bzw. einer Torsteuerung nicht gewährleistet ist.

Dieses technische Problem wird durch ein Überwachungsverfahren mit den Merkmalen gemäß Anspruch 1 oder 2 gelöst.

Das erfindungsgemäße Überwachungsverfahren für ein motorisch angetriebenes Tor, bei dem eine stationäre Einheit und eine an dem beweglichen Tor angeordnete Überwachungsvorrichtung bidirektional miteinander kommunizieren, wobei die Überwachungsvorrichtung durch eine Batterie oder Akkumulator oder eine sonstige mobile Stromversorgung mit elektrischer Energie versorgt wird und aus einer Weckvorrichtung, einer Steuervorrichtung, wenigstens einer Auswertevorrichtung und einem Sender/Empfänger besteht, und bei dem Daten und/oder Signale wenigstens eines an die Auswertevorrichtung angeschlossenen Sicherheitssensors für das Tor an die Torsteuerung weitergeleitet werden, und bei dem die Überwachungsvorrichtung von der stationären Einheit in einen Strom sparenden Ruhezustand gesetzt wird, und bei dem eine Weckvorrichtung selbsttätig zyklisch aufgeweckt wird, zeichnet sich dadurch aus, dass die Weckvorrichtung die Steuervorrichtung aufweckt, die ihrerseits den Sender/Empfänger aufweckt, und die eine ihr individuell zugeordnete stationäre Einheit aktiv fragt, ob die Überwachungsvorrichtung aktiv bleiben oder wieder in den Strom sparenden Ruhezustand wechseln soll, und dass die stationäre Einheit der Überwachungsvorrichtung den Befehl gibt, in den Ruhezustand zurückzukehren oder wach zu bleiben. Für den Fall, dass die Überwachungsvorrichtung aktiv bleiben soll, aktiviert die Steuervorrichtung über die wenigstens eine Auswertevorrichtung die jeweils zu überwachenden Sicherheitssensoren.

Erhält die Überwachungsvorrichtung auf ihre aktive Anfrage bei der stationären Einheit keine Antwort von der stationären Einheit, wechselt sie nach Ablauf einer Timeout-Zeit selbstständig wieder in den Strom sparenden Ruhezustand.

Dadurch, dass die Überwachungsvorrichtung selbsttätig zyklisch aufgeweckt wird und überprüft, ob sie einen Befehl von der stationären Einheit erhält, weist das erfindungsgemäße Überwachungsverfahren den Vorteil auf, dass die Überwachungsvorrichtung lediglich während der kurzen Phase der aktiven Anfrage bei der stationären Einheit wach ist und damit nur in dieser kurzen Phase Energie verbraucht. Lediglich wenn die Überwachungsvorrichtung von der stationären Einheit einen Befehl erhält wach zu bleiben, aktiviert die Steuervorrichtung die wenigstens eine Auswertevorrichtung, mit der die Sicherheitssensoren ausgewertet werden. Der Befehl von der stationären Einheit kann zusätzlich Informationen darüber enthalten, welche Auswertevorrichtungen zu aktivieren sind. Auswertevorrichtungen können beispielsweise vorgesehen sein für eine Schließkanteneinheit oder einen Crash-Sensor.

Zudem ist erfindungsgemäß vorgesehen, dass die stationäre Einheit der Überwachungsvorrichtung den Befehl gibt, dass diese in den Ruhezustand zurückkehren soll. Hierdurch ist gewährleistet, dass die Komponenten der Überwachungsvorrichtung nur so lange aktiv sind, wie es notwendig ist. Auch hierdurch kann zusätzlich Strom eingespart werden.

Das erfindungsgemäße Verfahren weist darüber hinaus den Vorteil auf, dass dadurch, dass die Überwachungsvorrichtung die stationäre Einheit aktiv fragt, ob sie aktiv bleiben soll, die stationäre Einheit nur mit der ihr zugeordneten Überwachungsvorrichtung kommuniziert. Andere an benachbarten Toren angeordnete Überwachungsvorrichtungen, die ebenfalls in dem Bereich der stationären Einheit liegen, werden nicht von der stationären Einheit geweckt, so dass keine Beeinflussung einer benachbarten Überwachungsvorrichtung erfolgt.

Zudem gewährleistet dieses Verfahren eine erhöhte Fehlersicherheit, weil sich die stationäre Einheit und die Überwachungsvorrichtung bereits zu Beginn einer Torbewegung darüber verständigen, ob sie funktionsbereit sind, und die drahtlose Funkverbindung zwischen beiden Komponenten gewährleistet ist.

Eine andere Ausführungsform der Erfindung zeichnet sich dadurch aus, dass ein in oder an der Überwachungsvorrichtung angeordneter Vibrationssensor an die Weckvorrichtung angeschlossen ist, der die Steuervorrichtung aufweckt, sobald er durch eine Vibration eine Torbewegung detektiert hat. Für den Fall, dass der Vibrationssensor durch ein anderes externes Ereignis, wie beispielsweise durch Wind, der an dem Tor rüttelt geweckt wird, erhält die Überwachungsvorrichtung von der stationären Einheit umgehend den Befehl, sich wieder in den inaktiven Zustand zu versetzen, wodurch der Stromverbrauch eines solchen "Fehlalarms" deutlich reduziert wird. Alle weiteren Merkmale dieser zweiten Ausführungsform sind identisch mit den Merkmalen der zuerst beschriebenen Ausführungsform, bei der ein zyklisches Aufwecken der Weckvorrichtung vorgesehen ist.

Dieses Überwachungsverfahren weist den Vorteil auf, dass die Überwachungsvorrichtung lediglich dann geweckt wird, wenn der Vibrationssensor tatsächlich eine Torbewegung erfasst. Diese Ausführungsform benötigt sehr wenig Strom, da ausschließlich der Vibrationssensor und die Weckvorrichtung mit Strom versorgt werden muss, damit diese dann die anderen Einheiten wie Sender/Empfänger, Steuerungsvorrichtung und Auswertevorrichtung aufwecken kann.

Gemäß einer besonders bevorzugten Ausführungsform der Erfindung kann auch eine Kombination der beiden Überwachungsverfahren vorgesehen sein. Grundsätzlich ist es möglich, dass der Vibrationssensor die Weckvorrichtung aufweckt. Zusätzlich kann die Weckvorrichtung in sehr großen Zeitabständen, zyklisch die Steuervorrichtung aufwecken, damit diese über den Sender/Empfänger bei der stationären Einheit anfragt, ob die Überwachungsvorrichtung wach bleiben soll. Dies kann Sinn machen, wenn der Vibrationssensor zumindest vorübergehend zu unempfindlich oder defekt ist, damit das Tor beispielsweise auch ohne Vibrationssensor gesteuert werden kann oder die Empfindlichkeit des Vibrationssensors wieder gezielt verändert werden kann.

Ein an die Auswertevorrichtung angeschlossener Sicherheitssensor kann beispielsweise eine Schließkanteneinheit sein, die in der Lage ist zu erkennen, ob das Tor auf ein Hindernis gelaufen ist und/oder es kann ein Sensor für eine Tür im Tor sein und/oder es kann ein Crash-Sensor sein, der in der Lage ist zu erkennen, ob das Tor durch einen Anstoß mit beispielsweise einem Fahrzeug aus seiner Führungsschiene gesprungen ist und/oder es kann ein Schlaffseilschalter und/oder eine beliebige andere Vorrichtung sein.

Gemäß einer besonders bevorzugten Ausführungsform der Erfindung ist der Vibrationssensor gleichzeitig als Crash-Sensor ausgebildet. Dies bedeutet, der Vibrationssensor würde während der Torbewegung und bei Torstillstand erkennen, ob das Tor beispielsweise von einen Gabelstapler so stark angefahren wurde, dass die Gefahr besteht, dass das Tor deformiert wurde oder aus seiner Führung gesprungen sein könnte. Das bedeutet, dass der Vibrationssensor, der ohnehin vorhanden und aktiv ist, zusätzlich einen Zusammenstoß eines Objektes mit dem Tor erfasst. Der Vibrationssensor meldet den Zusammenstoß vorteilhaft unmittelbar an die stationäre Einheit, die diese Information vorteilhaft an die Torsteuerung weiterleitet.

Ist die stationäre Einheit nicht aktiv und kann die Meldung nicht entgegennehmen, meldet der Vibrationssensor den Zusammenstoß vorteilhaft einer Puffervorrichtung, die die Meldung an die stationäre Einheit weitergibt, sobald diese wieder aktiv ist. Hierdurch wird vermieden, dass die Torsteuerung einen Fahrbefehl an das Tor gibt, wenn das Tor durch einen Zusammenstoß mit einem Objekt nicht betriebsbereit ist.

Um jegliche Bewegung des Tores nach einem Zusammenstoß auszuschließen, quittiert die Torsteuerung über die stationäre Einheit vorteilhaft die Meldung des Zusammenstoßes.

Gemäß einer weiteren vorteilhaften Ausführungsform sendet die stationäre Einheit an die Überwachungsvorrichtung einen Befehl, der die Überwachungsvorrichtung anweist, für eine bestimmte Zeitspanne nicht mehr aufzuwachen, weil sich das Tor beispielsweise in der Aufwärtsbewegung befindet, in der die Überwachungsvorrichtung inaktiv sein kann oder eine andere Funktion die Torbewegung für eine absehbare zeitspanne unterbindet. Hierdurch wird eine weitere Einsparung elektrischer Energie in der Überwachungsvorrichtung erzielt.

Die stationäre Einheit, die einen ortsfest angeordneten Sender/Empfänger aufweist, der bidirektional mit einer am beweglichen Tor angeordneten Überwachungsvorrichtung kommuniziert, kann als Steckkarte ausgebildet sein, die in die Torsteuerung oder in einen Positionsgeber zur Ermittlung der Torposition eingesteckt wird. Vorzugsweise handelt es sich dann um einen Positionsgeber, der ohnehin schon vorhanden ist. Bei dem Positionsgeber kann es sich beispielsweise auch um eine Vorrichtung handeln, die lediglich eine Bewegung des Tores oder des Torantriebs detektiert.

Dies weist den vorteil auf, dass bestehende Torsteuerungen mit der entsprechenden Ansteuerelektronik nachgerüstet werden können, so dass das erfindungsgemäße Verfahren auch bei zum Stand der Technik gehörenden Torsteuerungen einsetzbar ist. Ferner hat dies den Vorteil, dass die stationäre Einheit kein separates Gehäuse benötigt.

Die stationäre Einheit kann in der Torsteuerung oder dem Positionsgeber integriert sein. Hierdurch werden gegenüber der nachgerüsteten stationären Einheit Kosten eingespart, wenn die Torsteuerung oder der Positionsgeber von vornherein für das erfindungsgemäße Verfahren ausgerüstet ist.

Die stationäre Einheit kann in einiger Entfernung von der Torsteuerung oder dem Positionsgeber angeordnet sein und kommuniziert mit der Torsteuerung oder dem Positionsgeber über ein leitungsgebundenes Interface. In diesem Fall kann das Interface als mindestens ein digitaler Ausgang und mindestens ein digitaler Eingang ausgebildet sein oder als bidirektionale Datenschnittstelle ausgeführt sein. Dies hat den Vorteil, dass unabhängig vom Montageort der ortsfesten Torsteuerung oder des Positionsgebers die stationäre Einheit so angeordnet werden kann, dass eine optimale drahtlose Kommunikation zu der am Tor montierten Überwachungsvorrichtung gewährleistet ist. Zudem bietet dies den Vorteil, dass die stationäre Einheit an beliebigen Torsteuerungen und/oder Positionsgebern angeschlossen werden kann.

Die Anordnung der stationären Einheit in oder in der Nähe des Positionsgebers hat den Vorteil, dass auf jeden Fall eine zuverlässige Funkverbindung vorhanden ist, weil sich der Positionsgeber jeweils in der Nähe des Tores befindet. Darüber hinaus ist vorteilhaft, dass die Überwachungsvorrichtung, wenn sie aufwacht, bei der stationären Einheit fragt, ob der mit ihr in Verbindung stehende Positionsgeber eine Bewegung des Tores erfasst hat. Hat er eine Bewegung erfasst, übermittelt die stationäre Einheit dies an die Überwachungsvorrichtung, sobald diese aktiv anfragt, woraufhin die Überwachungsvorrichtung aktiv bleibt, ansonsten kehrt sie in den Strom sparenden Ruhemodus zurück. Darüber hinaus hat dies den Vorteil, dass lediglich ein digitaler Ausgang ausreicht, um die Information von der Überwachungsvorrichtung an eine beliebige Torsteuerung zu übermitteln.

Zum Beispiel fragt der Positionsgeber bei Erfassung einer Torbewegung bei der Torsteuerung nach, ob tatsächlich eine gewollte Torbewegung vorliegt, oder ob beispielsweise eine Bewegung aufgrund einer Rüttelbewegung durch Wind vom Positionsgeber erfasst wurde. Dieses Nachfragen ist jedoch optional.

Grundsätzlich ist es nicht erforderlich, dass die mobile Überwachungseinrichtung oder die stationäre Einheit bei der Torsteuerung rückfragen.

Die am Tor montierte Überwachungsvorrichtung weist vorteilhaft wenigstens eine Auswertevorrichtung auf, an die wenigstens ein Sicherheitssensor, der beispielsweise als Schließkanteneinheit ausgebildet sein kann, angeschlossen ist. Hierbei weist die Schließkanteneinheit einen Sensor an mindestens einer Schließkante des Tores auf, der ein Signal übermittelt, wenn sich ein Hindernis im Bereich des Tores befindet, so dass das Tor nicht zufahren und/oder auffahren kann.

Der Sicherheitssensor kann auch als Sensor für eine Tür im Tor vorgesehen sein. Ist die Tür nicht geschlossen, darf das Tor nicht geöffnet werden.

Der Sicherheitssensor kann auch als so genannter Crash-Sensor ausgebildet sein. Wird das Tor beispielsweise durch ein Fahrzeug, wie einen Gabelstapler beschädigt, spricht der Crash-Sensor an und übermittelt eine Fehlermeldung.

Der Sicherheitssensor kann auch als Schlaffseilschalter, Referenzschalter oder sonstige Vorrichtung ausgebildet sein.

Zum Beispiel sind die Sensoren als adaptierende, das heißt selbstlernende Sensoren ausgebildet. Für das Beispiel des vibrationssensors kann der Lernvorgang darin bestehen, dass durch das Rütteln des Tores durch Wind der Sensor lernt, dass bei dieser Art Bewegung im Normalfall kein Befehl der stationären Einheit kommt, und dass die Empfindlichkeit des Vibrationssensors für diese Art der Bewegung sich selbsttätig erhöht. In diesem Fall weckt die Weckvorrichtung nicht mehr bei jedem Erkennen einer Vibration die Steuerungsvorrichtung, sondern nur, wenn vom Vibrationssensor ein für eine Torbewegung typisches Vibrationsmuster erkannt wurde.

Auch die anderen beschriebenen Sensoren sind vorteilhaft als adaptierende Sensoren ausgebildet.

Die Sicherheitssensoren können zusätzlich dazu genutzt werden, die Weckvorrichtung zu wecken. Besonders vorteilhaft kann dieses genutzt werden, um die Überwachungsvorrichtung zu aktivieren, wenn beispielsweise die Schlupftür geöffnet wird oder ein Crashsensor anspricht, während das Tor steht oder keine Überwachung der Torbewegung notwendig ist. Dies kann aber beispielsweise auch für Sicherheitsleisten genutzt werden, die nach einem pneumatischen oder auf elektrischen Kontakten basierenden Wirkprinzip arbeiten, um die Überwachungsvorrichtung spätestens dann zu wecken, wenn der Sicherheitssensor durch ein Hindernis aktiviert wurde. Dies hätte den Vorteil einer erhöhten Betriebssicherheit, falls die primär vorgesehenen Vorrichtungen zum Wecken der Überwachungsvorrichtung versagen sollten.

Die vorliegende Erfindung ist nicht ausschließlich auf die Ansteuerung eines Tores beschränkt. Auch andere motorisch angetriebene Türen sind ein Anwendungsbeispiel der vorliegenden Erfindung.

Bei dem Verfahren, bei dem der Wecksensor zyklisch aufgeweckt wird ohne zusätzliches Vorsehen eines Vibrationssensors, können die Zeiten folgendermaßen aussehen: Vorteilhaft wird der Wecksensor beispielsweise von einem Timer zyklisch in einer Zeitspanne zwischen 100 und 300 ms (Millisekunden) geweckt. Bevorzugt wird der Wecksensor alle 200 ms geweckt. Wenn die stationäre Einheit antwortet, erfolgt ein Einschlafen des Wecksensors nach circa 10 ms. Erhält der Wecksensor keine Antwort von der stationäre Einheit, probiert er mehrmals, ob nicht doch ein Antwortsignal erhalten wird. Ohne Antwortsignal schläft er nach circa 100 ms wieder ein. In diesem Fall steigt die Zeit für das zyklische Aufwachen vorteilhaft an, beispielsweise auf fünf bis zehn Sekunden.

Bei dem Verfahren, bei dem der Wecksensor in erster Linie von dem Vibrationssensor geweckt wird, wird der Wecksensor selbsttätig vorteilhaft zusätzlich jeweils nach fünf bis zehn Sekunden geweckt, wobei dieser Zyklus durch ein von dem Vibrationssensor verursachtes Aufwachen vorteilhaft jeweils neu gestartet wird.

Weitere Merkmale und Vorteile der Erfindung ergeben sich anhand der zugehörigen Zeichnung, in der ein Ausführungsbeispiel einer erfindungsgemäßen Überwachungsreinrichtung und des erfindungsgemäßen Verfahrens dargestellt ist. In der Zeichnung zeigen:
- Fig. 1: eine schematische Darstellung eines Tores;
- Fig. 2: ein Blockschaltbild einer möglichen Ausführungsform der Überwachungsvorrichtung;
- Fig. 3: ein schematisch dargestellter Ablauf des erfindungsgemäßen Verfahrens in der Überwachungsvorrichtung;
- Fig. 4: ein schematisch dargestellter Ablauf des erfindungsgemäßen Verfahrens in der Torsteuerung;
- Fig. 5: eine schematische Darstellung möglicher Bestandteile und Abläufe des Verfahrens zur Bearbeitung der Weckvorrichtung.

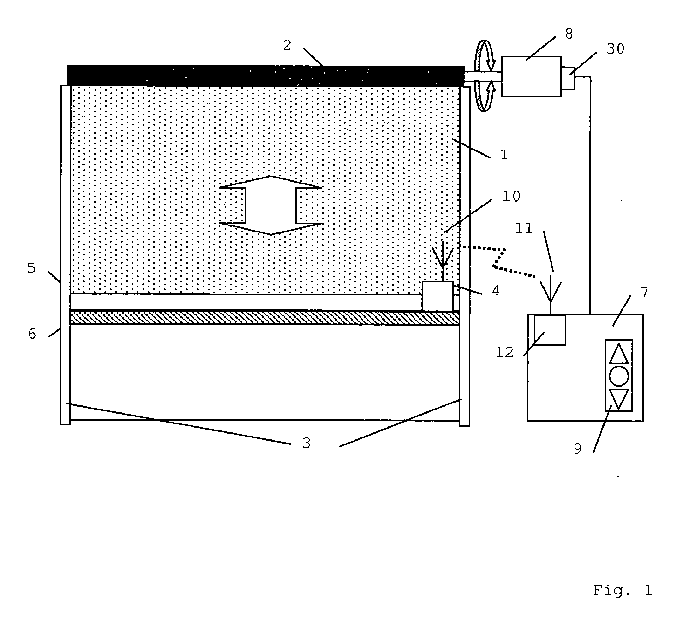

Fig. 1 zeigt ein Tor 1, welches in Führungsschienen 3 geführt ist und über eine Torwelle 2 mit einem Torantrieb 8 bewegbar ist. Bei dem dargestellten Tor handelt es sich um ein Wickeltor, bei dem das Tor 1 während der Aufbewegung um die Torwelle 2 gewickelt wird. Der Torantrieb 8 wird dabei durch eine Torsteuerung 7 gesteuert, die über Bedienelemente 9 befehligt werden kann. In oder an dem Torantrieb 8 ist ein Positionsgeber 30 angeordnet. Die Torsteuerung 7 beinhaltet zudem eine stationäre Einheit 12, die über eine Antenne 11 mit einer Überwachungsvorrichtung 4 drahtlos kommunizieren kann. An einer Unterkante des Tores 1 befindet sich ein Abschlussprofil 5, welches dem Tor 1 Stabilität verleiht. An der Unterkante des Abschlussprofils 5 ist ein Sicherheitssensor 6 montiert, der beispielsweise als Lichtschranke oder elektrischer Kontakt oder als pneumatisches Schaltelement ausgebildet sein kann.

Ferner ist an dem Abschlussprofil 5 die Überwachungsvorrichtung 4 angeordnet, die dazu dient, Signale von Sicherheitssensoren 6 auszuwerten. Die Überwachungsvorrichtung 4 beinhaltet zudem einen Sender/Empfänger 24 (hier nicht dargestellt), der über die Antenne 10 mit der Torsteuerung 7 drahtlos kommunizieren kann.

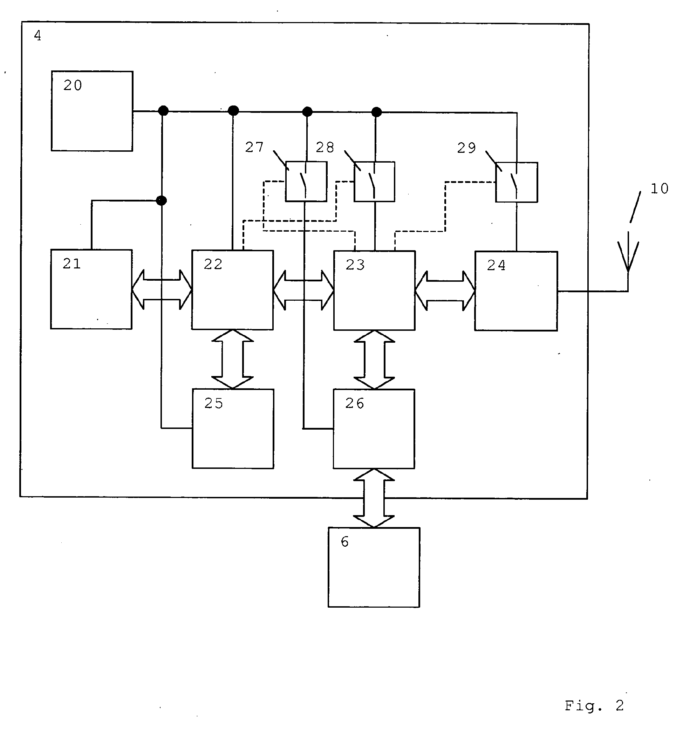

In Fig. 2 ist ein Blockschaltbild einer möglichen Ausführungsform der Überwachungsvorrichtung 4 dargestellt. Eine Batterie 20 dient dabei als Stromversorgung für alle elektronischen Komponenten der Überwachungsvorrichtung 4, wobei einzelne Komponenten nur im Bedarfsfall über Schalter 27, 28, 29 mit elektrischer Energie versorgt werden können, damit der Stromverbrauch der gesamten Vorrichtung möglichst optimal gesteuert werden kann.

Die elektronischen Komponenten Weckvorrichtung 22 und/oder Steuervorrichtung 23 und/oder Sender/Empfänger 24 und/oder Timer und/oder Auswertevorrichtung und/oder Schalter 27, 28, 29 der Überwachungsvorrichtung 4 können dabei Bestandteil eines Mikroprozessors oder eines anderen integrierten Schaltkreises sein.

Sobald ein Vibrationssensor 21 eine Torbewegung detektiert hat, übermittelt er dies an eine Weckvorrichtung 22. Ferner ist an die Weckvorrichtung 22 ein Timer 25 angeschlossen, der es der Weckvorrichtung 22 ermöglicht, zyklisch aufzuwachen. Nachdem die Weckvorrichtung 22 die Notwendigkeit eines Weckvorganges festgestellt hat, aktiviert sie über den Schalter 28 eine Steuervorrichtung 23, die ihrerseits den Sender/Empfänger 24 über den Schalter 29 aktiviert, um über die Antenne 10 aktiv bei der Torsteuerung anzufragen, ob sie wach bleiben soll.

Empfängt eine Steuervorrichtung 23 von der Torsteuerung 7 den Befehl wach zu bleiben und die Sicherheitssensoren 6 abzufragen, aktiviert die Steuervorrichtung 23 über den Schalter 27 eine Auswertevorrichtung 26, die ihrerseits die Signale der Sicherheitssensoren 6 aufbereitet oder diese bedarfsweise aktiviert und die so gewonnenen Informationen an die Steuervorrichtung 23 übermittelt.

Während dieser Phase, in der die Überwachungsvorrichtung 4 aktiviert ist, findet ein kontinuierlicher Datenaustausch zwischen der Überwachungsvorrichtung 4 und der Torsteuerung 7 statt. Dabei werden Statusinformationen der Sicherheitssensoren, der Ladezustand der Batterie 20 und sonstige Diagnoseinformationen über die Vorrichtungen der Überwachungsvorrichtung 4 zur Torsteuerung 7 übertragen und Befehle oder Betriebsparameter von der Torsteuerung 7 zur Überwachungsvorrichtung 4 gesendet.

Hat das Tor einen Zustand erreicht, in dem keine Überwachung des Tores 1 durch die Überwachungsvorrichtung 4 mehr benötigt wird, initiiert die Torsteuerung 7 das Senden eines Befehls an die Überwachungsvorrichtung 4, woraufhin die Steuervorrichtung 23 die Auswertevorrichtung 26 und den Sender/Empfänger 24 abschalten kann. Zudem übermittelt die Steuerungsvorrichtung 23 den Abschaltbefehl, der auch noch zusätzliche Informationen enthalten kann, an die Weckvorrichtung 22, die ihrerseits die Steuervorrichtung 23 abschaltet, bis ein erneutes Ereignis zum Aktivieren der Steuervorrichtung 23 eintritt.

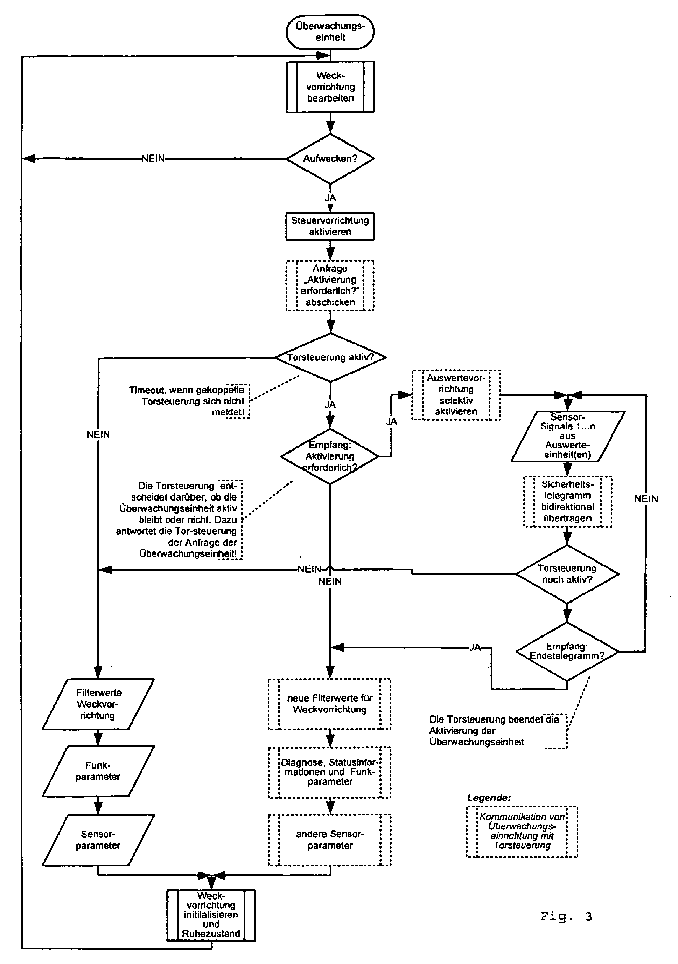

Fig. 3 zeigt das Ablaufdiagramm des Verfahrens, welches von der Überwachungsvorrichtung 4 ausgeführt wird. Die Überwachungsvorrichtung 4 weist die Weckvorrichtung 22 auf. Die Weckvorrichtung 22 erhält ein Wecksignal, beispielsweise von dem Vibrationssensor 21, weil sich das Tor 1 bewegt, oder weil die Weckvorrichtung 22 zyklisch durch den Timer 25 geweckt wurde. Nachdem als Folge des Weckens der Steuervorrichtung 23 auch der Sender/Empfänger 24 aktiviert wurde, erfolgt eine Anfrage bei der stationären Torsteuerung 7, ob die Überwachungsvorrichtung aktiv bleiben soll und ob die Auswertevorrichtung 26 aktiviert werden soll.

Erhält die Überwachungsvorrichtung 4 keinen Befehl oder keine Rückantwort von der Torsteuerung, durchläuft sie die optionalen Routinen zur adaptiven Einstellung der Empfindlichkeit des Wecksensors zur Einstellung der Parameter für die drahtlose Datenübertragung und zur Einstellung weitere adaptiver Sensorparameter und wechselt wieder in den Ruhezustand, in dem lediglich die Weckvorrichtung aktiv ist.

Erhält die Überwachungsvorrichtung 4 hingegen einen Befehl von der stationären Torsteuerung 7, so erfolgt zunächst eine Prüfung, ob der Befehl besagt, dass eine weitere Aktivierung der Überwachungsvorrichtung 4 notwendig ist oder ob sie wieder in den inaktiven Zustand wechseln soll.

Ist von der Torsteuerung 7 eine Aktivierung der Überwachungsvorrichtung 4 befohlen, wird die Auswertevorrichtung 26 selektiv aktiviert und die Sicherheitssensoren abgefragt. Das Ergebnis dieser Abfrage wird dann an die Torsteuerung 7 in Form einer bidirektionalen Datenübertragung, die beispielsweise eine Quittierung der Datenübertragung beinhaltet, übermittelt.

Stellt die Überwachungsvorrichtung 4 dabei fest, dass die Torsteuerung 7 nicht mehr antwortet, kehrt sie nach Durchlaufen der optionalen Routinen zur adaptiven Einstellung ihrer Parameter wieder in den Ruhezustand zurück.

Erhält die Überwachungsvorrichtung 4 allerdings weiterhin Befehle von der Torsteuerung, wertet sie diese aus bleibt entsprechend der Befehle entweder weiter aktiv und wertet die Sicherheitssensoren weiter aus oder sie leitet den Zustandswechsel in den inaktiven Zustand ein.

Bevor die Überwachungsvorrichtung in den inaktiven Zustand wechselt, übernimmt sie die von der Torsteuerung 7 übermittelten Parameter zur Einstellung der Empfindlichkeit der Weckvorrichtung 22 (Filter), sendet Statusinformationen an die Torsteuerung 7 und nimmt gegebenenfalls weitere Parameter von der Torsteuerung 7 entgegen.

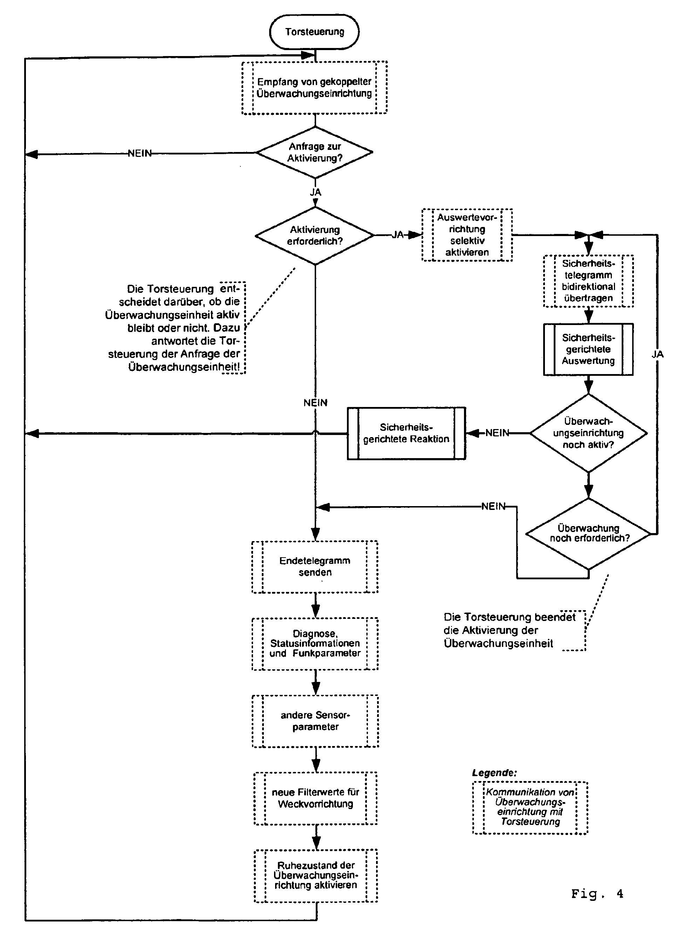

Fig. 4 zeigt das Ablaufdiagramm des Verfahrens, welches von der Torsteuerung 7 ausgeführt wird.

Hat die Torsteuerung 7 eine Meldung der ihr zugeordneten Überwachungsvorrichtung 4 empfangen, die besagt, dass die Überwachungsvorrichtung 4 geweckt wurde, prüft sie, ob eine weitere Aktivierung der Überwachungsvorrichtung 4 notwendig ist und sendet im Bedarfsfalle einen Befehl zur selektiven Aktivierung der Auswerteeinheit 26 an die Überwachungsvorrichtung 4.

Danach startet der bidirektionale Datenverkehr, bei dem die Zustandsinformationen der Sicherheitssensoren von der Überwachungsvorrichtung übermittelt werden, die daran anschließend ausgewertet und entsprechende Reaktionen eingeleitet werden.

Daran anschließend überprüft die Torsteuerung 7, ob die Überwachungsvorrichtung weiter aktiv bleiben soll und sendet der Überwachungsvorrichtung die entsprechenden Befehle.

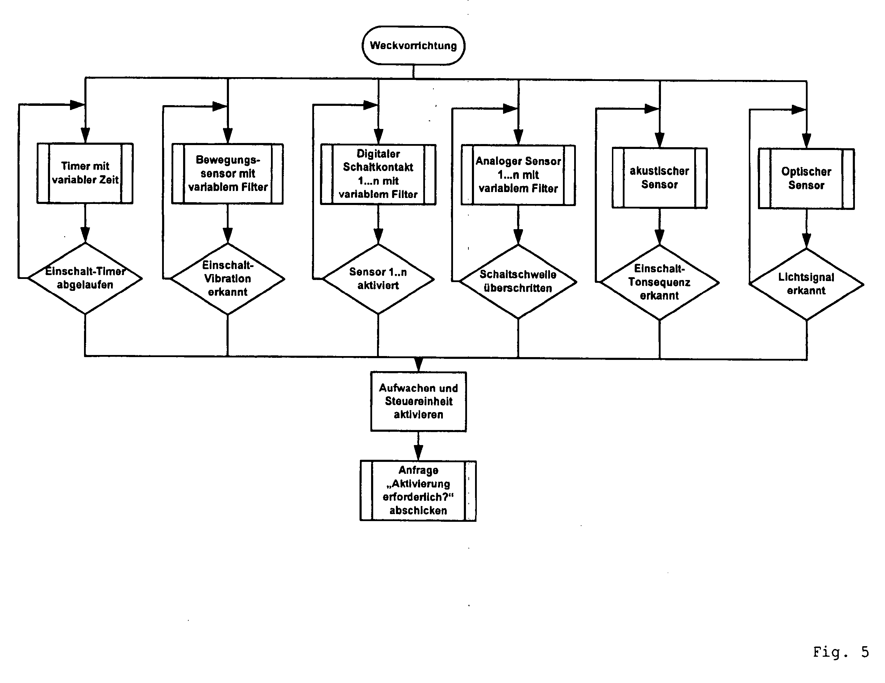

Fig. 5 zeigt den Verfahrensablauf der Weckvorrichtung 22.

### Bezugszahlen

- 1: Tor
- 2: Torwelle
- 3: Führungsschienen
- 4: Überwachungsvorrichtung
- 5: Abschlussprofil
- 6: Sicherheitssensor
- 7: Torsteuerung
- 8: Torantrieb
- 9: Bedienelemente
- 10, 11: Antenne
- 12: stationäre Einheit
- 20: Batterie
- 21: Vibrationssensor
- 22: Weckvorrichtung
- 23: Steuervorrichtung
- 24: Sender/Empfänger
- 25: Timer
- 26: Auswertevorrichtung
- 27, 28, 29: Schalter
- 30: Positionsgeber

## Patentansprüche

1. Überwachungsverfahren für ein motorisch angetriebenes Tor, bei dem eine mit einer Torsteuerung in Verbindung stehende stationäre Einheit und eine an dem beweglichen Tor angeordnete Überwachungsvorrichtung bidirektional miteinander kommunizieren, wobei die Überwachungsvorrichtung durch eine Batterie oder Akkumulator oder eine sonstige mobile Stromversorgung mit elektrischer Energie versorgt wird und aus einer Weckvorrichtung, einer Steuervorrichtung, wenigstens einer Auswertevorrichtung und einem Sender/Empfänger besteht, und bei dem Daten und/oder Signale wenigstens eines an die Auswertevorrichtung angeschlossenen Sicherheitssensors für das Tor an die stationäre Einheit weitergeleitet werden, und bei dem die Überwachungsvorrichtung von der stationären Einheit in einen Strom sparenden Ruhezustand gesetzt wird, und bei der die Weckvorrichtung selbsttätig zyklisch aufgeweckt wird,
**dadurch gekennzeichnet, dass** die Weckvorrichtung (22) die Steuervorrichtung (23) aufweckt, die ihrerseits den Sender/Empfänger (24) aufweckt, und die die ihr individuell zugeordnete stationäre Einheit (12) aktiv fragt, ob die Überwachungsvorrichtung (4) aktiv bleiben oder wieder in einen Strom sparenden Ruhezustand wechseln soll, und dass die stationäre Einheit (12) als Antwort der Überwachungsvorrichtung (4) den Befehl gibt, entweder in den Ruhezustand zurückzukehren oder wach zu bleiben.

2. Überwachungsverfahren für ein motorisch angetriebenes Tor, bei dem eine mit einer Torsteuerung in Verbindung stehende stationäre Einheit und eine an dem beweglichen Tor angeordnete Überwachungsvorrichtung bidirektional miteinander kommunizieren, wobei die Überwachungsvorrichtung durch eine Batterie oder Akkumulator oder eine sonstige mobile Stromversorgung mit elektrischer Energie versorgt wird und aus einer Weckvorrichtung, einer Steuervorrichtung, wenigstens einer Auswertevorrichtung und einem Sender/Empfänger besteht, und bei dem Daten und/oder Signale wenigstens eines an die Auswertevorrichtung angeschlossenen Sicherheitssensors für das Tor an die stationäre Einheit weitergeleitet werden, und bei dem die Überwachungsvorrichtung von der stationären Einheit in einen Strom sparenden Ruhezustand gesetzt wird,
**dadurch gekennzeichnet, dass** ein Vibrationssensor (21) die Weckvorrichtung (22) aufweckt, wenn der Vibrationssensor (21) eine Vibration aufgrund einer Torbewegung detektiert, und dass die Weckvorrichtung (22) die Steuervorrichtung (23) aufweckt, die ihrerseits den Sender/Empfänger (24) aufweckt, und die die ihr individuell zugeordnete stationäre Einheit (12) aktiv fragt, ob die Überwachungsvorrichtung (4) aktiv bleiben oder wieder in einen Strom sparenden Ruhezustand wechseln soll, und dass die stationäre Einheit (12) als Antwort der Überwachungsvorrichtung (4) den Befehl gibt, entweder in den Ruhezustand zurückzukehren oder wach zu bleiben.

3. Verfahren nach Anspruch 1 oder 2, **dadurch gekennzeichnet, dass** für den Fall, dass die Überwachungsvorrichtung (4) aktiv bleiben soll, die Steuervorrichtung (23) über die wenigstens eine Auswertevorrichtung (26) die jeweils zu überwachenden Sicherheitssensoren (6) aktiviert.

4. Verfahren nach Anspruch 1 oder 2, **dadurch gekennzeichnet, dass** die stationäre Einheit (12) an die Überwachungsvorrichtung (4) einen Befehl sendet, der die Überwachungsvorrichtung (4) anweist, für eine bestimmte Zeitspanne inaktiv zu bleiben, in der die Überwachungsvorrichtung (4) inaktiv sein kann oder eine andere Funktion die Torbewegung für eine absehbare Zeitspanne unterbindet.

5. Verfahren nach Anspruch 2, **dadurch gekennzeichnet, dass** die Weckvorrichtung (22) zusätzlich zu dem Weckvorgang durch den Vibrationssensor (21) zyklisch selbsttätig aufgeweckt wird.

6. Verfahren nach Anspruch 2, **dadurch gekennzeichnet, dass** der Vibrationssensor (21) zusätzlich einen Zusammenstoß eines Objektes mit dem Tor (1) erfasst.

7. Verfahren nach Anspruch 6, **dadurch gekennzeichnet, dass** der Vibrationssensor (21) den Zusammenstoß unmittelbar der stationären Einheit (12) meldet.

8. Verfahren nach Anspruch 6, **dadurch gekennzeichnet, dass** der Vibrationssensor (21) den Zusammenstoß einer Puffervorrichtung meldet, wenn die stationäre Einheit (12) die Meldung nicht entgegennehmen kann.

9. Verfahren nach Anspruch 7 oder 8, **dadurch gekennzeichnet, dass** die Torsteuerung (7) die Meldung des Zusammenstoßes über die stationäre Einheit (12) quittiert.

10. Verfahren nach Anspruch 2, **dadurch gekennzeichnet, dass** der Vibrationssensor (21) selbstständig lernt, eine gewollte Torbewegung von einer ungewollten Torbewegung zu unterscheiden.

11. Verfahren nach einem der vorhergehenden Ansprüche, **dadurch gekennzeichnet, dass** die Weckvorrichtung (22) nach dem Wecken nach einer vorbestimmten Zeitspanne ohne Empfang eines Befehls der stationären Einheit (12) wieder selbsttätig in den Ruhezustand zurückkehrt.

12. Verfahren nach Anspruch 1 oder 2, **dadurch gekennzeichnet, dass** die stationäre Einheit (12) als eigenständige Einheit ausbildet ist und über wenigstens einen digitalen Eingang und/oder wenigstens einen digitalen Ausgang und/oder ein Interface mit der ortsfesten Torsteuerung (7) und/oder dem wenigstens einen Positionsgeber (30) kommuniziert.

13. Verfahren nach einem der vorhergehenden Ansprüche, **dadurch gekennzeichnet, dass** die stationäre Einheit (12) bei dem Positionsgeber (30) anfragt, ob der Positionsgeber eine Torbewegung detektiert hat.

14. Verfahren nach einem der vorhergehenden Ansprüche, **dadurch gekennzeichnet, dass** die stationäre Einheit (12) bei einer Torsteuerung (7) anfragt, ob diese eine Torbewegung initiiert hat.

## Claims

1. Monitoring method for a motor-driven door, wherein a stationary unit in communication with a door controller and a monitoring device arranged on the movable door communicate bidirectionally with one another, the monitoring device being supplied with electrical energy by a battery or accumulator or some other mobile power supply and comprising a waking device, a control device, at least one analyser device and a transmitter/receiver, and wherein data and/or signals of at least one door safety sensor connected to the analyser device are relayed to the stationary unit, and wherein the monitoring device is set by the stationary unit into a power-saving idle state, and wherein the waking device is automatically wakened cyclically,
**characterised in that** the waking device (22) wakes the control device (23), which in turn wakes the transmitter/receiver (24) and which actively queries the stationary unit (12) assigned individually to it as to whether the monitoring device (4) is to remain active or be switched back to a power-saving idle state, and **in that** as a response the stationary unit (12) transmits to the monitoring device (4) the instruction either to return to the idle state or remain awake.

2. Monitoring method for a motor-driven door, wherein a stationary unit in communication with a door controller and a monitoring device arranged on the movable door communicate bidirectionally with one another, the monitoring device being supplied with electrical energy by a battery or accumulator or some other mobile power supply and comprising a waking device, a control device, at least one analyser device and a transmitter/receiver, and wherein data and/or signal of at least one door safety sensor connected to the analyser device are relayed to the stationary unit, and wherein the monitoring device is set by the stationary unit into a power-saving idle state,
**characterised in that** a vibration sensor (21) wakes the waking device (22) when the vibration sensor (21) detects a vibration caused by a door movement, and **in that** the waking device (22) wakes the control device (23), which in turn wakes the transmitter/receiver (24) and which actively queries the stationary unit (12) assigned individually to it as to whether the monitoring device (4) is to remain active or be switched back to the power-saving idle state, and **in that** as a response the stationary unit (12) transmits to the monitoring device (4) the instruction either to return to the idle state or remain awake.

3. Method according to Claim 1 or 2, **characterised in that**, for the case where the monitoring device (4) is to remain active, the control device (23) activates the respective safety sensors (6) to be monitored, via the at least one analyser device (26).

4. Method according to Claim 1 or 2, **characterised in that** the stationary unit (12) sends the monitoring device (4) an instruction which directs the monitoring device (4) to remain inactive for a certain time interval during which the monitoring device (4) can be inactive, or another function prevents door movement for a foreseeable time interval.

5. Method according to Claim 2, **characterised in that** the waking device (22) is automatically wakened cyclically in addition to the waking operation by the vibration sensor (21).

6. Method according to Claim 2, **characterised in that** the vibration sensor (21) additionally senses a collision of an object with the door (1).

7. Method according to Claim 6, **characterised in that** the vibration sensor (21) signals the collision immediately to the stationary unit (12).

8. Method according to Claim 6, **characterised in that** the vibration sensor (21) signals the collision to a buffer device if the stationary unit (12) is unable to accept the message.

9. Method according to Claim 7 or 8, **characterised in that** the door controller (7) acknowledges the message about the collision via the stationary unit (12).

10. Method according to Claim 2, **characterised in that** the vibration sensor (21) autonomously learns to distinguish an intentional door movement from an unintentional door movement.

11. Method according to one of the preceding claims, **characterised in that** the waking device (22), after waking, automatically reverts to the idle state after a predetermined time interval without reception of an instruction from the stationary unit (12).

12. Method according to Claim 1 or 2, **characterised in that** the stationary unit (12) is designed as a standalone unit and communicates with the fixed door controller (7) and/or the at least one position encoder (30) via at least one digital input and/or at least one digital output and/or an interface.

13. Method according tc one of the preceding claims, **characterised in that** the stationary unit (12) queries the position encoder (30) as to whether the position encoder has detected a door movement.

14. Method according to one of the preceding claims, **characterised in that** the stationary unit (12) queries a door controller (7) as to whether the door controller has initiated a door movement.

## Revendications

1. Procédé de surveillance d'une porte actionnée par un moteur, selon lequel une unité fixe, reliée à une commande de porte, et un dispositif de surveillance, disposé sur la porte mobile, communiquent entre eux de manière bidirectionnelle, ledit dispositif de surveillance étant alimenté en énergie électrique par batterie ou accumulateur ou par un autre système mobile de fourniture de courant, et étant formé par un dispositif de réveil, un dispositif de commande, au moins un dispositif d'analyse et un émetteur/récepteur, et selon lequel des données et/ou des signaux d'au moins un capteur de sécurité pour la porte, raccordé au dispositif d'analyse, sont transmis vers l'unité fixe, et selon lequel le dispositif de surveillance est amené en position de repos avec économie de courant par l'unité fixe, et selon lequel le dispositif de réveil est réveillé automatiquement par cycles,
**caractérisé en ce que** le dispositif de réveil (22) réveille le dispositif de commande (23) qui, pour sa part, réveille l'émetteur/récepteur (24) et interroge activement l'unité fixe (12), qui lui est associée individuellement, pour savoir si le dispositif de surveillance (4) doit rester actif ou revenir dans une position de repos avec économie de courant, et **en ce que**, en réponse, l'unité fixe (12) ordonne au dispositif de surveillance (4) de retourner en position de repos ou de rester éveillé.

2. Procédé de surveillance d'une porte actionnée par un moteur, selon lequel une unité fixe, reliée à une commande de porte, et un dispositif de surveillance, disposé sur la porte mobile, communiquent entre eux de manière bidirectionnelle, ledit dispositif de surveillance étant alimenté en énergie électrique par batterie ou accumulateur ou par un autre système mobile de fourniture de courant, et étant formé par un dispositif de réveil, un dispositif de commande, au moins un dispositif d'analyse et un émetteur/récepteur, et selon lequel des données et/ou des signaux d'au moins un capteur de sécurité pour la porte, raccordé au dispositif d'analyse, sont transmis vers l'unité fixe, et selon lequel le dispositif de surveillance est amené en position de repos avec économie de courant par l'unité fixe,
**caractérisé en ce qu'**un capteur de vibrations (21) réveille le dispositif de réveil (22) lorsque le capteur de vibrations (21) détecte une vibration due à un mouvement de la porte, et **en ce que** le dispositif de réveil (22) réveille le dispositif de commande (23) qui, pour sa part, réveille l'émetteur/récepteur (24) et interroge activement l'unité fixe (12), qui lui est associée individuellement, pour savoir si le dispositif de surveillance (4) doit rester actif ou revenir dans une position de repos avec économie de courant, et **en ce que**, en réponse, l'unité fixe (12) ordonne au dispositif de surveillance (4) de retourner en position de repos ou de rester éveillé.

3. Procédé selon la revendication 1 ou 2, **caractérisé en ce que** dans le cas où le dispositif de surveillance (4) doit rester actif, le dispositif de commande (23) active, via ledit au moins un dispositif d'analyse (26), les capteurs de sécurité (6) à surveiller respectivement.

4. Procédé selon la revendication 1 ou 2, **caractérisé en ce que** l'unité fixe (12) envoie au dispositif de surveillance (4) une instruction ordonnant au dispositif de surveillance (4) de rester inactif pendant un intervalle de temps déterminé, pendant lequel le dispositif de surveillance (4) peut rester inactif ou une autre fonction empêche le mouvement de la porte pendant un intervalle de temps prévisible.

5. Procédé selon la revendication 2, **caractérisé en ce que** le dispositif de réveil (22), en plus du processus de réveil, est réveillé automatiquement par cycles par le capteur de vibrations (21).

6. Procédé selon la revendication 2, **caractérisé en ce que** le capteur de vibrations (21) détecte en plus une collision entre un objet et la porte (1).

7. Procédé selon la revendication 6, **caractérisé en ce que** le capteur de vibrations (21) signale la collision immédiatement à l'unité fixe (12).

8. Procédé selon la revendication 6, **caractérisé en ce que** le capteur de vibrations (21) signale la collision à un dispositif tampon lorsque l'unité fixe (12) ne peut pas recevoir le message.

9. Procédé selon la revendication 7 ou 8, **caractérisé en ce que** la commande de porte (7) accuse réception du message de collision via l'unité fixe (12).

10. Procédé selon la revendication 2, **caractérisé en ce que** le capteur de vibrations (21) apprend automatiquement à différencier un mouvement volontaire de la porte d'un mouvement involontaire de la porte.

11. Procédé selon l'une quelconque des revendications précédentes, **caractérisé en ce que** le dispositif de réveil (22), après le réveil, revient automatiquement dans la position de repos lorsqu'il n'a pas reçu d'instruction de l'unité fixe (12) après un intervalle de temps prédéterminé.

12. Procédé selon la revendication 1 ou 2, **caractérisé en ce que** l'unité fixe (12) est réalisée sous la forme d'une unité autonome et communique, via au moins une entrée numérique et/ou au moins une sortie numérique et/ou une interface, avec la commande de porte (7) fixe et/ou avec ledit au moins un capteur de position (30).

13. Procédé selon l'une quelconque des revendications précédentes, **caractérisé en ce que** l'unité fixe (12) interroge le capteur de position (30) pour savoir si ledit capteur de position a détecté un mouvement de la porte.

14. Procédé selon l'une quelconque des revendications précédentes, **caractérisé en ce que** l'unité fixe (12) interroge une commande de porte (7) pour savoir si celle-ci a initié un mouvement de la porte.
